# EUROPÄISCHE PATENTANMELDUNG

(11) **EP 3 208 019 A1**
(43) Veröffentlichungstag der Anmeldung: **23.08.2017**
(21) Anmeldenummer: 16195463.1
(22) Anmeldetag: 25.10.2016
(51) Int. Cl.: B23D 13/00

(54) **HOBEL- UND/ODER STOSSWERKZEUG UND BEARBEITUNGSVERFAHREN UNTER VERWENDUNG DES WERKZEUGES**

(30) Priorität: 18.02.2016 DE 202016100860 U
(71) Anmelder: Schwalbach, Jürgen, 75172 Pforzheim (DE)
(72) Erfinder: Schwalbach, Jürgen, 75172 Pforzheim (DE)
(74) Vertreter: Wacker, Jost Oliver

(57) **Zusammenfassung**

Die Erfindung betrifft ein Hobel- und/oder Stoßwerkzeug (H) sowie ein Verfahren für die Herstellung eines mehrere drehsymmetrisch angeordnete radiale Profilverjüngungen (16) aufweisenden Innenprofils (8) an einem Befestigungselement (2), wobei an dem Stoßwerkzeug (H) ein sich entlang einer Längsachse (A) erstreckender Schaft (20) vorgesehen ist, der an einem ersten Ende ein Einsteckende (22) für die Festlegung an einer Werkzeugaufnahme einer Werkzeugmaschine und an einem vom ersten Ende abgewandten zweiten Ende einen Schneidenabschnitt (24) aufweist, an dem eine Hauptschneide (26) ausgeformt ist, deren Außenprofil (28) an ein Profilsegment (18) des herzustellenden Innenprofils (8) angepasst ist. Dabei ist vorgesehen, dass sich das Außenprofil (28) der Hauptschneide (26) über einen Profilabschnitt (P) erstreckt, der genau eine Außenprofilverjüngung (30) einschließt, die an eine der herzustellenden Pfofilverjüngungen (16) angepasst ist.

## Beschreibung

Die Erfindung betrifft ein Hobel- beziehungsweise Stoßwerkzeug für die Herstellung eines Innenprofils an einem Befestigungselement, das mehrere drehsymmetrisch angeordnete radiale Profilverjüngungen aufweist, nach dem Oberbegriff des Anspruchs 1. Ferner betrifft die Erfindung ein Bearbeitungsverfahren zur Herstellung eines solchen Befestigungselementes unter Verwendung eines derartigen Hobel- und/oder Stoßwerkzeuges sowie ein entsprechendes Befestigungselement. Das Hobel- und/oder Stoßwerkzeug weist dabei einen sich entlang der Längsachse erstreckenden Schaft auf, der an einem ersten Ende ein Einsteckende für die Festlegung an einer Werkzeugaufnahme einer Werkzeugmaschine aufweist. Zudem weist der Schaft an einem vom ersten Ende abgewandten zweiten Ende einen Schneidenabschnitt auf, an dem eine Hauptschneide ausgeformt ist, deren Außenprofil an ein Profilsegment des herzustellenden Innenprofils angepasst ist. Das Profilsegment kann dabei beispielsweise durch ein Prismensegment eines Mehrkantprofils, wie insbesondere eines Sechskant- oder Vierkantprofils, oder durch ein Segment eines Torx- oder eines sonstigen drehsymmetrischen Profils gebildet sein.

Derzeit sind am Markt Hobel- und/oder Stoßwerkzeuge erhältlich und entsprechende Bearbeitungsverfahren bekannt, mit denen ausgehend von einer Durchgangsbohrung ein durchgehendes Innenprofil durch Hobeln oder Stoßen in ein Werkstück eingearbeitet werden kann. Hierzu wird das Hobei- und/oder Stoßwerkzeug mehrfach relativ zum Werkstück entlang der Durchgangsbohrung verlagert, um in spanabhebender Weise das gewünschte Profil herzustellen.

Aus der DE 10 2007 058 825 A1 ist ein Schneidwerkzeug zum Stoßen von Nuten bekannt. Um hierbei sowohl Innen- als auch Außennuten an einem Werkstück herstellen zu können, weist das Schneidwerkzeug eine erste Längsachse auf, die versetzt zu einer zweiten Längsachse eines Werkzeughalters angeordnet ist. Das Schneidwerkzeug kann dadurch zwischen einer ersten Position, in der eine Außennut herstellbar ist, und einer zweiten Position, in der eine Innennut herstellbar ist, verschwenkt werden.

Derzeit besteht am Markt eine Nachfrage nach Befestigungselementen, wie beispielsweise Schrauben für den medizinischen Bereich, in die ein bestimmtes Innenprofil exakt eingearbeitet ist und die präzise Außenabmessungen aufweisen.

Ein derartiges Innenprofil ist mit den oben genannten Hobel- und/oder Stoßwerkzeugen beziehungsweise mit den hierzu bekannten Bearbeitungsverfahren nur als durchgehendes Profil oder mit einem relativ großen Hinterschnitt herstellbar, wodurch jedoch die Stabilität und insbesondere die Scherfestigkeit der Werkzeugaufnahme insgesamt deutlich verringert wird.

Alternativ hierzu ist es auch bekannt ein derartiges Innenprofil durch Einpressen eines entsprechend geformten Presswerkzeuges in das betreffende Befestigungselement einzulassen. Hierbei wird jedoch das Befestigungselement insgesamt derart stark verformt, dass es die in vielen Bereichen vorgegebenen Maßtoleranzen, wie insbesondere in der Medizintechnik, nicht einhalten kann.

Die Aufgabe der Erfindung ist es daher, bei einem Hobel- und/oder Stoßwerkzeug die genannten Nachteile zu vermeiden und eine besonders exakte und stabile Ausbildung eines Innenprofils, insbesondere in Form eines Sacklochs zu ermöglichen.

Diese Aufgabe wird durch ein Hobel- und/oder Stoßwerkzeug mit den Merkmalen des Anspruchs 1 gelöst. Dabei erstreckt sich das Außenprofil der Hauptschneide über einen Profilabschnitt, der genau eine Außenprofilverjüngung einschließt, die an eine der herzustellenden Profilverjüngungen angepasst ist. Mittels eines solchen Hobel- und/oder Stoßwerkzeuges können somit die einzelnen Profilverjüngungen nacheinander hergestellt werden, indem das Werkzeug wiederkehrend mit fortschreitender Zustellung in spanabhebender Weise linear entlang einer Ausgangsbohrung bewegt wird, bis ein vorgegebenes Eckenmaß erreicht ist. Nach derartiger Fertigstellung einer der Profilverjüngungen kann das Hobel- und/oder Stoßwerkzeug dann relativ zum Werkzeug um einen Winkel verdreht werden, der 360° geteilt durch eine Zähligkeit der Drehsymmetrie des herzustellenden Innenprofils beträgt. Auf diese Weise kann das Hobel- und/oder Stoßwerkzeug zur exakten Herstellung aller Profilverjüngungen und des gesamten gewünschten Innenprofils verwendet werden.

In einer besonders vorteilhaften Ausführungsform erstreckt sich der Profilabschnitt bezüglich der Längsachse über einen Winkelabschnitt, der größer ist als 360° geteilt durch eine Zähligkeit der Drehsymmetrie des herzustellenden Innenprofils. Hierdurch wird erreicht, dass sich jeweils zwei benachbarte Profilsegmente des herzustellenden Innenprofils teilweise überlappen, was wiederum eine besonders präzise und glatte Ausbildung der einzelnen Flächen des Innenprofils ermöglicht.

Dabei ist es günstig, wenn an der Hauptschneide eine stirnseitige Spanfläche ausgeformt ist, die mit einer Normalen zur Längsachse einen Spanwinkel von wenigstens 2°, vorzugsweise 5 bis 10° einschließt. Durch eine derartige Spanfläche ist es möglich, die im Zuge einer jeweiligen linearen Bewegung hergestellten Späne durch zusätzliche Bewegung zur Längsachse hin sicher auszubrechen. Vorteilhafterweise ist in die Spanfläche dabei ein Hohlschliff eingelassen, was ein leichteres Ausbrechen der Späne ermöglicht.

Zudem ist es günstig, wenn die Spanfläche zwischen der Hauptschneide und einer Freisparung des Schneidenabschnittes ausgebildet ist. Die Freisparung kann dabei beispielsweise durch Abschrägen einer Seite des Schneidenabschnittes hergestellt werden, wobei die hierbei hergestellte schräge Außenseite des Schneidenabschnittes mit der Längsachse einen Winkel von wenigstens 12° einschließt. Eine derartige Freisparung ermöglicht dabei die Herstellung einer Werkzeugaufnahme mit relativ großer Profiltiefe, da sich der Schneidenabschnitt in Bearbeitungsrichtung verjüngt und dadurch relativ weit in eine Ausgangsbohrung eingeführt werden kann, ohne zu verkanten. Zudem kann das Hobel- und/oder Stoßwerkzeug durch eine derartige Freisparung auch bei Erreichen des Sacklochbodens in einem ausreichenden Maß zur Längsachse hin bewegt werden, um einen zuvor hergestellten Span abbrechen zu können.

Vorteilhafterweise ist die Hauptschneide zudem zwischen der Spanfläche und einer Freiwinkelfläche ausgebildet, die mit der Längsachse einen Freiwinkel von wenigstens 2° einschließt. Ein derartiger Freiwinkel ermöglicht dabei ein leichteres Abtrennen eines hergestellten Spans. Ferner ist es günstig, wenn zwischen der Freiwinkelfläche und dem Schaft ein Freischliff in den Schneidenabschnitt eingelassen ist. Hierdurch kann der Kontaktbereich zwischen dem Schneidenabschnitt und dem zu bearbeitenden Werkstück im Wesentlichen auf den Bereich der Hauptschneide beschränkt werden, was eine störungsfreie Bearbeitung des Werkstückes ermöglicht. In einer weiteren vorteilhaften Ausführungsform weist der Freischliff gegenüber der Freiwinkelfläche eine sprunghafte Längsschnittvertiefung auf. Durch eine derartige Längsschnittvertiefung kann eine bevorzugte Lebensdauer der Hauptschneide vorbestimmt werden.

Ferner ist es günstig, wenn sich der Schneidenabschnitt von der Hauptschneide zum Schaft hin verjüngt und dabei vorzugsweise einen Verjüngungswinkel zwischen 3 und 5° aufweist. Eine derartige Verjüngung des Schneidenabschnittes ermöglicht nach dem Erreichen des Sacklochbodens eine ungestörte beziehungsweise kontaktfreie Rückbewegung des Hobel- und/oder Stoßwerkzeuges aus der Sacklochbohrung heraus.

Vorteilhafterweise ist in den Schneidenabschnitt zusätzlich ein Kühlkanal eingelassen, der sich zur Spanfläche hin erstreckt. Auf diese Weise ist eine aktive Kühlung des Schneidenabschnittes und damit eine längere Verwendung des Hobel- und/oder Stoßwerkzeuges während einer Anwendung ohne die Entstehung schadhafter Temperaturen möglich.

Zudem ist es günstig, wenn an dem Schaft eine Ausrichtfläche ausgeformt ist, die eine exakte Ausrichtung des Hobel- und/oder Stoßwerkzeuges ermöglicht, wie beispielsweise mittels Verwendung einer Messuhr.

Vorteilhafterweise weist das Hobel- und/oder Stoßwerkzeug zumindest im Bereich der Hauptschneide eine Titan-Aluminium-Nitrit-Beschichtung auf. Hierdurch kann eine besonders hohe Standzeit des Hobel- und/oder Stoßwerkzeuges gewährleistet werden. Alternativ oder zusätzlich hierzu kann an dem Hobel- und/oder Stoßwerkzeug Cermet als Schneidstoff vorgesehen sein, was eine besonders exakte spanabhebende Bearbeitung des betreffenden Werkstücks ermöglicht.

Ferner wird die oben genannte Aufgabe durch ein Bearbeitungsverfahren für die Herstellung einer mehrfach drehsymmetrischen Werkzeugaufnahme in einem Befestigungselement unter Verwendung eines Hobel- und/oder Stoßwerkzeuges in einer der oben genannten Ausführungsformen gelöst. Dabei wird in einem ersten Schritt entlang einer Bearbeitungsachse eine Ausgangsbohrung in das Befestigungselement eingearbeitet. In einem zweiten Schritt wird ein Bearbeitungsablauf ausgeführt, bei dem das Hobel- und/oder Stoßwerkzeug relativ zum jeweiligen Werkstück aus einer ersten Ausgangslage in einer ersten Drehstellung parallel zur Bearbeitungsachse in spanabhebender Weise in die Ausgangsbohrung hinein verlagert wird. Auf Höhe eines Sacklochbodens wird das Hobel- und/oder Stoßwerkzeug dann zum Ausbrechen entstandener Späne zur Bearbeitungsachse hin bewegt. Anschließend wird das Hobel- und/oder Stoßwerkzeug parallel zur Bearbeitungsachse wieder aus der Ausgangsbohrung bzw. der nun bereits teilweise profilierten Sacklochbohrung heraus bewegt. Daraufhin wird das Hobel- und/oder Stoßwerkzeug in eine nachfolgende Ausgangslage in der ersten Drehstellung verfahren, die gegenüber der vorhergehenden Ausgangslage entlang einer senkrecht zur Bearbeitungsachse stehenden Profilierungsrichtung um eine Zustellung versetzt angeordnet ist. Anschließend wird dieser Bewegungsablauf so lange wiederholt, bis bezüglich der Profilierungsrichtung ein vorgegebenes Eckenmaß erreicht ist. In einem dritten Schritt wird das Hobel- und/oder Stoßwerkzeug dann in eine erste Ausgangslage in einer zweiten Drehstellung verlagert. Aus dieser zweiten Drehstellung heraus wird dann ein dem zweiten Schritt entsprechender Bearbeitungsablauf durchgeführt. Ferner wird in nachfolgenden Schritten das Hobel- und/oder Stoßwerkzeug wiederkehrend in erste Ausgangslagen in weiteren Drehstellungen verlagert und aus diesen heraus jeweils ein dem zweiten Schritt entsprechender Bearbeitungsablauf durchgeführt, bis die mehrfach drehsymmetrische Werkzeugaufnahme vollständig ausgebildet ist. Durch dieses Bearbeitungsverfahren kann das gesamte gewünschte Innenprofil exakt bis auf Höhe des vorgegebenen Sacklochbodens in das betreffende Werkstück eingelassen werden. Auf diese Weise ist weder ein Hinterschnitt des Innenprofils noch eine Ausführung desselben als durchgehende Ausnehmung erforderlich. Das Bearbeitungsverfahren ermöglicht auf diese Weise die Herstellung des Innenprofils einer Werkzeugaufnahme durch Hobeln beziehungsweise Stoßen, wodurch eine exakte und insbesondere im Wesentlichen ungerundete Ausbildung von Profilecken ermöglicht wird. Zudem weist eine auf diese Weise hergestellte Werkzeugaufnahme eine hohe Stabilität, insbesondere hinsichtlich seiner Scherfestigkeit auf.

Vorteilhafterweise beträgt die Zustellung im zweiten Schritt hierbei jeweils höchstens ein Prozent der Nennweite der herzustellenden Werkzeugaufnahme. Durch eine derart geringe Zustellung beziehungsweise einen derart geringen Versatz des Hobel- und/oder Stoßwerkzeuges zwischen zwei aufeinanderfolgenden Bearbeitungsvorgängen ist eine Ausbildung von relativ geringen Spanstärken gewährleistet, die ein problemloses Ausbrechen der Späne durch die translatorische Bewegung des Hobel- und/oder Stoßwerkzeuges.

Dabei ist es günstig, wenn das Hobel- und/oder Stoßwerkzeug auf Höhe des Sacklochbodens senkrecht zur Bearbeitungsachse zu dieser hin bewegt wird. Auf diese Weise kann ein sicheres Ausbrechen der Späne auf Höhe des Sacklochbodens gewährleistet werden.

Alternativ hierzu ist es günstig, wenn das Hobel- und/oder Stoßwerkzeug auf Höhe des Sacklochbodens entlang einer schrägen zur Bearbeitungsachse zu dieser hin bewegt wird. Auf diese Weise ist eine formmäßige Anpassung des Sacklochbodens an ein spezielles Werkzeug möglich. Hierzu kann der Sacklochboden beispielsweise konisch oder konkav ausgeformt werden.

Darüber hinaus wird die oben genannte Aufgabe durch ein Befestigungselement mit einer mehrfach drehsymmetrischen Werkzeugaufnahme gelöst, die im Bearbeitungsverfahren nach einer der oben genannten Ausführungsformen hergestellt ist. Dabei ist die Werkzeugaufnahme durch ein ausgehobeltes profiliertes Sackloch gebildet. Durch das Aushobeln der Werkzeugaufnahme kann dessen Innenprofil ohne merkliche Verformung des übrigen Befestigungselementes eingeformt werden. Hierdurch kann das Befestigungselement insgesamt mit besonders geringen Toleranzen hergestellt werden, was wiederum beispielsweise eine Verwendung des Befestigungselementes im medizinischen Bereich ermöglicht. Vorteilhafterweise ist das Innenprofil hierbei bis zu dem Sacklochboden der Werkzeugaufnahme durchgehend ausgebildet. Hierdurch weist die Werkzeugaufnahme eine besonders hohe Stabilität, insbesondere hinsichtlich seiner Scherfestigkeit auf.

Hierbei ist es günstig, wenn der Sacklochboden konisch ausgeformt ist. Hierdurch ist eine selbsttätig zentrierte Beaufschlagung durch ein entsprechend geformtes Werkzeug möglich.

In den Figuren ist eine beispielhafte Ausführungsform der Erfindung dargestellt. Es zeigen:
- Figur 1: eine Seitenansicht eines erfindungsgemäßen Befestigungselementes,
- Figur 2A: eine Draufsicht auf eine Werkzeugaufnahme des Befestigungselementes in Richtung II aus Figur 1,
- Figur 2B: eine Draufsicht auf eine alternative Werkzeugaufnahme mit einem Vierkantprofil,
- Figur 2C: eine Draufsicht auf eine weitere alternative Werkzeugaufnahme mit einem Torx-Profil,
- Figur 2D: eine Draufsicht auf eine weitere alternative Werkzeugaufnahme mit einem Torx-Plus-Profil,
- Figur 3A: eine Ansicht eines erfindungsgemäßen Hobel- und/oder Stoßwerkzeuges,
- Figur 3B: eine Ansicht des Hobel- und/oder Stoßwerkzeuges in Richtung IIIB aus Figur 3A,
- Figur 4: eine stirnseitige Ansicht des Hobel- und/oder Stoßwerkzeuges in Richtung IV aus Figur 3B,
- Figur 5A: eine Seitenansicht des Hobel- und/oder Stoßwerkzeuges in einer Ausgangslage an einem Befestigungselement mit darin eingelassener Ausgangsbohrung,
- Figur 5B: eine stirnseitige Ansicht des Befestigungselementes nach Figur 5A,
- Figur 6A: eine Seitenansicht des Hobel- und/oder Stoßwerkzeuges nach Figur 5A in einer Position an einem Sacklochboden des Befestigungselementes,
- Figur 6B: eine stirnseitige Ansicht des Befestigungselementes nach Figur 6A,
- Figur 7A: eine stirnseitige Ansicht des Befestigungselementes nach Figur 6B in einer zweiten Drehstellung des Hobel- und/oder Stoßwerkzeuges,
- Figur 7B: eine stirnseitige Ansicht des Befestigungselementes nach Figur 7A in einer dritten Drehstellung des Hobel- und/oder Stoßwerkzeuges und
- Figur 7C: eine stirnseitige Ansicht des Befestigungselementes nach Figur 7B nach Fertigstellung der Werkzeugaufnahme.

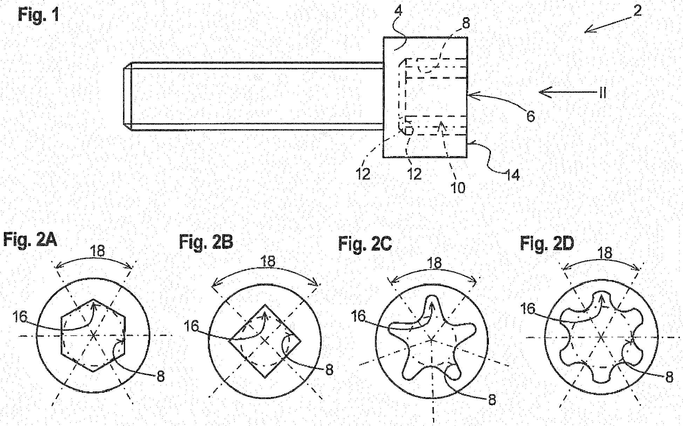

Fig. 1 zeigt ein Befestigungselement 2 in Form einer Schraube, wie insbesondere eine Präzisionsschraube zur Verwendung im medizinischen Bereich. Das Befestigungselement 2 weist dabei einen Kopf 4 auf, in den eine Werkzeugaufnahme 6 eingelassen ist. Die Werkzeugaufnahme 6 dient zur Beaufschlagung des Betätigungselementes 2 durch ein Werkzeug (nicht dargestellt), wie insbesondere einem manuell oder motorisch angetriebenen Schraubendreher.

Hierzu bildet die Werkzeugaufnahme 6 ein Innenprofil 8 aus, dessen Form und Größe an vorbestimmte Werkzeuge angepasst sind. Um hierbei eine besonders präzise Anpassung des Innenprofils 8 an die jeweiligen Werkzeuge erreichen zu können, ist diese beziehungsweise die Werkzeugaufnahme 6 durch ein ausgehobeltes profiliertes Sackloch 10 mit einem Sacklochboden 12 gebildet. Je nach Form des vorgesehenen Werkzeuges kann der Sacklochboden 12 dabei entweder einen geraden Abschluss des Innenprofils 8 bilden oder, wie durch strichpunktierte Linie dargestellt, beispielsweise konisch oder konkav ausgebildet sein. In jedem Fall ist das Innenprofil 8 dabei von einer Außenseite 14 des Kopfes 4 bis zum Sacklochboden 12 durchgehend ausgebildet. Alternativ hierzu ist es ferner auch möglich, dass sich die Werkzeugaufnahme 6 beziehungsweise das Innenprofil 8 in Richtung des Sacklochbodens 12 verjüngt (nicht dargestellt), um eine bessere Festlegung an dem betreffenden Werkzeug zu ermöglichen.

Wie in den Figuren 1 und 2A dargestellt, kann das Innenprofil 8 als Mehrkantprofil, wie insbesondere als Sechskantprofil ausgebildet sein. Alternativ hierzu kann das Innenprofil 8 auch jede andere bekannte und geeignete Form aufweisen, an der mehrere drehsymmetrisch angeordnete radiale Profilverjüngungen 16 ausgebildet sind. Neben anderen Mehrkantprofilen, wie beispielsweise dem in Figur 2B dargestellten Vierkantprofil, kommen dabei insbesondere Torx (siehe Figur 2C) und Torx-Plus-Profile (siehe Figur 2D) infrage. In jedem Fall setzen sich dabei die Innenprofile 8 gemäß einer Zähligkeit ihrer Drehsymmetrie aus einer entsprechenden Anzahl von Profilsegmenten 18 zusammen.

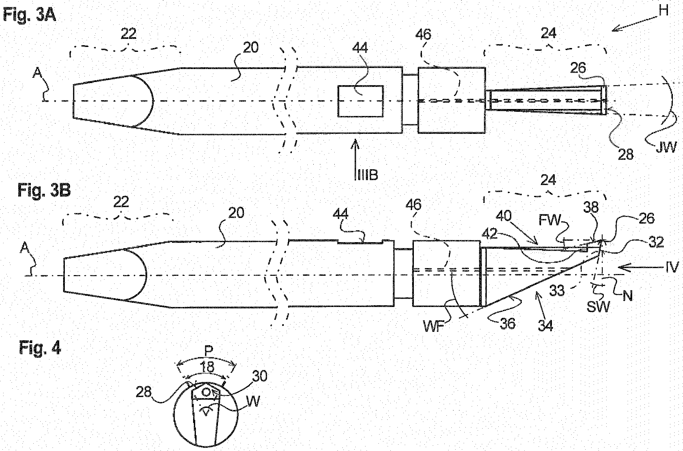

Zum Aushobeln des jeweiligen Innenprofils 8 wird hierbei erfindungsgemäß ein Hobel- und/oder Stoßwerkzeug H gemäß Figuren 3A und 3B verwendet. Dieses weist einen sich entlang einer Längsachse A erstreckenden Schaft 20 auf, der an einem ersten Ende ein Einsteckende 22 aufweist, das zur Festlegung an einer Werkzeugaufnahme einer Werkzeugmaschine dient. An einem von diesem ersten Ende abgewandten zweiten Ende ist ferner ein Schneidenabschnitt 24 ausgebildet.

An dem Schneidenabschnitt 24 ist dabei eine Hauptschneide 26 ausgeformt, die ein Außenprofil 28 aufweist, das an das herzustellende Innenprofil 8 des betreffenden Befestigungselementes 2 angepasst ist. Das Außenprofil 28 erstreckt sich dabei, wie insbesondere aus Figur 4 zu entnehmen ist, über einen Profilabschnitt P, der eine Außenprofilverjüngung 30 einschließt, die an die einzelnen herzustellenden Profilverjüngungen 16 des Innenprofils 8 angepasst ist. Hierdurch bildet das Außenprofil 28 beispielsweise im Falle eines Hobel- und/oder Stoßwerkzeuges H zur Herstellung eines Mehrkantprofils einen entsprechenden Winkel oder im Falle eines Hobel- und/oder Stoßwerkzeuges H zur Herstellung eines Torx-Profils eine entsprechende abgerundete Spitze aus.

In jedem Fall erstreckt sich der Profilabschnitt P bezüglich der Längsachse A über einen Winkelabschnitt W, der größer ist als 360° geteilt durch die jeweilige Zähligkeit der Drehsymmetrie des herzustellenden Innenprofils 8. Hierdurch ist der Profilabschnitt P um einen gewissen Winkelabstand weiter als das betreffende Profilsegment, vorzugsweise zu beiden Seite um 1 bis 3°. Im Falle eines herzustellenden Sechskantprofils ergibt sich somit ein Winkelabschnitt W von mehr als 60°, wie beispielsweise 62 bis 66°.

Wie insbesondere aus Figur 3B zu entnehmen ist, ist an der Hauptschneide 26 eine stirnseitige Spanfläche 32 ausgeformt, die mit einer Normalen N zur Längsachse A einen Spanwinkel SW von wenigstens 2, vorzugsweise 5 bis 10° einschließt. Optional kann dabei in die Spanfläche 32 auch ein Hohlschliff 33 eingelassen sein.

Wie aus Figur 3B ferner zu entnehmen ist, ist die stirnseitige Spanfläche 32 zwischen der Hauptschneide 20 und einer Freisparung 34 ausgebildet. Die Freisparung 34 kann dabei wie dargestellt durch eine Abschrägung des Schneidenabschnittes 24 geformt sein. Eine Außenseite 36 der Abschrägung schließt dabei mit der Längsachse A einen Winkel WF von wenigstens 12° ein.

Zudem ist die Hauptschneide 26 zwischen der Spanfläche 32 und einer Freiwinkelfläche 38 ausgebildet, die mit der Längsachse A einen Freiwinkel FW von wenigstens 2° einschließt. Zwischen der Freiwinkelfläche 38 und dem Schaft 20 ist dabei ein Freischliff 40 in den Schneidenabschnitt 24 eingelassen. Der Freischliff 40 formt hierbei gegenüber der Freiwinkelfläche 38 eine sprunghafte Längsschnittvertiefung 42 aus.

Wie aus Figur 3A zu entnehmen ist, verjüngt sich der Schneidenabschnitt 24 von der Hauptschneide 26 zum Schaft 20 hin und bildet dabei einen Verjüngungswinkel JW der vorzugsweise zwischen 3 und 5° liegt. Zudem kann in den Schaft 20 eine Ausrichtfläche 44 eingelassen sein, die eine präzise Ausrichtung des Hobel- und/oder Stoßwerkzeuges H mittels einer Messuhr ermöglicht (nicht dargestellt). Ferner kann in den Schneidenabschnitt ein Kühlkanal 46 eingearbeitet sein, der sich vom Schaft 20 zur Spanfläche 32 hin erstreckt und die Zuführung eines Kühlmediums zu dieser ermöglicht, um das Hobel- und/oder Stoßwerkzeug H während eines Arbeitsvorganges aktiv kühlen zu können.

Um eine ausreichende Härte des Hobel- und/oder Stoßwerkzeuges H gewährleisten zu können, kann an diesem eine Titan-Aluminium-Nitrit-Beschichtung vorgesehen oder die Hauptschneide 26 aus einem besonders geeigneten Schneidstoff, wie insbesondere Cermet, hergestellt sein.

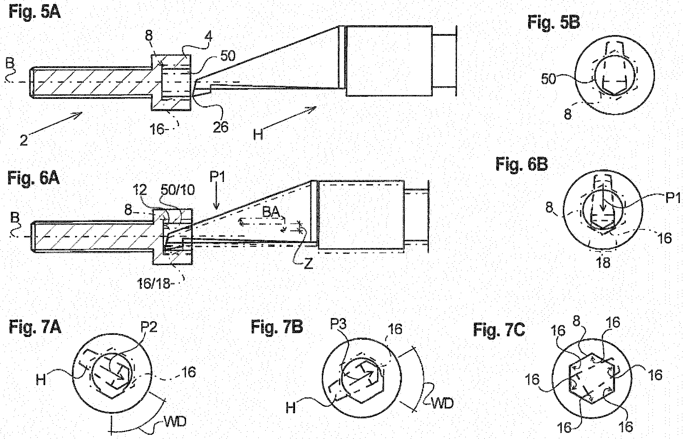

Zur Herstellung des Innenprofils 8 im Kopf 4 des Befestigungselementes 2 wird zunächst eine Ausgangsbohrung 50 entlang einer Bearbeitungsachse B in den Kopf 4 eingelassen, wie sie in den Figuren 5A und 5B dargestellt ist. Anschließend wird dann das Hobel- und/oder Stoßwerkzeug H in die dargestellte erste Ausgangslage gegenüber dem Befestigungselement 2 verbracht, in der die Hauptschneide 26 benachbart zu einem Bereich der Ausgangsbohrung 50 positioniert ist, in den die erste der Profilverjüngungen 16 eingearbeitet wird. Das Hobel- und/oder Stoßwerkzeug H befindet sich dabei in einer ersten Drehstellung gegenüber dem Befestigungselement 2.

Aus dieser ersten Ausgangslage erfolgt dann ein Bearbeitungsablauf, bei dem das Hobel- und/oder Stoßwerkzeug H parallel zur Bearbeitungsachse B in spanabhebender Weise bis in die in Fig. 6A dargestellte Position in die Ausgangsbohrung 50 hinein verlagert wird, die sich auf Höhe des herzustellenden Sacklochbodens 12 befindet. Hier wird das Hobel- und/oder Stoßwerkzeug H dann kurz in Richtung der Bearbeitungsachse B bewegt, um die zuletzt entstandenen Späne auszubrechen. Anschließend wird das Hobel- und/oder Stoßwerkzeug H dann parallel zur Bearbeitungsachse B wieder aus dem Sackloch 10 heraus bewegt und in eine zweite Ausgangslage verbracht, in der sich das Hobel- und/oder Stoßwerkzeug H nach wie vor in der ersten Drehstellung befindet. Der prinzipielle Bewegungsablauf des Hobel- und/oder Stoßwerkzeuges H relativ zum Befestigungselement 2 zwischen den beiden Ausgangslagen ist dabei in Fig. 6A durch die Pfeilfolge BA teilweise vergrößert wiedergegeben.

In der zweiten Ausgangslage ist das Hobel- und/oder Stoßwerkzeug H dann gegenüber der ersten Ausgangslage entlang einer senkrecht zur Bearbeitungsachse B stehenden ersten Profilierungsrichtung P1 um eine vorbestimmte Zustellung Z versetzt angeordnet, wobei die erste Profilierungsrichtung P1 einer Ausrichtung des ersten herzustellenden Profilverjüngung 16 entspricht. Die Zustellung Z beträgt dabei maximal 1% des Nennmaßes des herzustellenden Innenprofils 8, das heißt im Falle eines 4mm-Sechskantprofils maximal 0,04 mm.

Aus dieser zweiten Ausgangslage heraus erfolgt dann wiederum eine spanabhebende Verlagerung des Hobel- und/oder Stoßwerkzeuges H in das Sackloch 10 hinein bis zum Sacklochboden 12, wo es wieder zur Bearbeitungsachse B hin, aus dem Sackloch 10 heraus und unter erneutem Versatz um die vorgegebene Zustellung Z in die dritte Ausgangslage verlagert wird.

Dieser Vorgang wird solange wiederholt bis ein vorgegebenes Eckenmaß des Profilsegmentes 18 erreicht ist, wie in den Figuren 6A und 6B durch strichpunktierte Linien dargestellt. In dieser Position kann der letzte Bearbeitungsablauf als Kalibrierungsschritt noch einmal ohne Zustellung Z wiederholt werden.

Im Anschluss hieran wird dann das außerhalb des Sacklochs 10 positionierte Hobel- und/oder Stoßwerkzeug H gegenüber dem Befestigungselement um einen Winkel WD in eine zweite Drehstellung verschwenkt. Der Winkel WD entspricht dabei 360° geteilt durch die Zähligkeit der Drehsymmetrie des herzustellenden Innenprofils 8 (siehe Figur 7A). In dieser zweiten Drehstellung erfolgt dann der oben beschriebene Bearbeitungsablauf entlang einer zweiten Profilierungsrichtung P2 erneut, um die zweite der Profilverjüngungen 16 herzustellen. Hiernach wird das Hobel- und/oder Stoßwerkzeug H wiederum um den Winkel WD in eine dritte Drehstellung gemäß Fig. 7B verschwenkt und so weiter, bis alle Profilverjüngungen 16 des gewünschten Innenprofils 8 hergestellt sind, wie in Fig. 7C dargestellt.

Alternativ zu der in den Figuren 5A und 5B dargestellten geraden Ausbildung des Sacklochbodens 12 kann dieser dabei, wie bereits oben beschrieben, auch konisch oder konkav ausgeformt werden. Hierzu wird das Hobel- und/oder Stoßwerkzeug H bei der Herstellung eines jeden Profilsegmentes 18 über den jeweiligen Bearbeitungsablauf BA hinweg weniger weit in das Sackloch 10 hinein verfahren und zudem am Sacklochboden 12 entlang einer Schrägen in Richtung der Bearbeitungsachse B bewegt.

Ferner können alle oben beschriebenen Verfahrensschritte durch eine Verlagerung des Hobel- und/oder Stoßwerkzeuges H gegenüber dem Befestigungselement 2 erfolgen oder alternativ hierzu durch eine Verlagerung des Befestigungselementes 2 gegenüber dem Hobel- und/oder Stoßwerkzeug H.

## Patentansprüche

1. Hobel- und/oder Stoßwerkzeug (H) für die Herstellung eines mehrere drehsymmetrisch angeordnete radiale Profilverjüngungen (16) aufweisenden Innenprofils (8) an einem Befestigungselement (2)
mit einem sich entlang einer Längsachse (A) erstreckenden Schaft (20), der an einem ersten Ende ein Einsteckende (22) für die Festlegung an einer Werkzeugaufnahme einer Werkzeugmaschine und
an einem vom ersten Ende abgewandten zweiten Ende einen Schneidenabschnitt (24) aufweist, an dem eine Hauptschneide (26) ausgeformt ist, deren Außenprofil (28) an ein Profilsegment (18) des herzustellenden Innenprofils (8) angepasst ist,
**dadurch gekennzeichnet, dass** sich das Außenprofil der Hauptschneide (26) über einen Profilabschnitt (P) erstreckt, der genau eine Außenprofilverjüngung (30) einschließt, die an eine der herzustellenden Pfofilverjüngungen (16) angepasst ist.

2. Hobel- und/oder Stoßwerkzeug nach Anspruch 1, **dadurch gekennzeichnet, dass** sich der Profilabschnitt (P) bezüglich der Längsachse (A) über einen Winkelabschnitt (W) erstreckt, der größer ist als 360° geteilt durch eine Zähligkeit der Drehsymmetrie des herzustellenden Innenprofils.

3. Hobel- und/oder Stoßwerkzeug nach Anspruch 1 oder 2, **dadurch gekennzeichnet, dass** an der Hauptschneide (26) eine stirnseitige Spanfläche (32) ausgeformt ist, die mit einer Normalen (N) zur Längsachse (A) einen Spanwinkel (SW) von wenigstens 2°, vorzugsweise 5 bis 10° einschließt.

4. Hobel- und/oder Stoßwerkzeug nach Anspruch 3, **dadurch gekennzeichnet, dass** die Spanfläche (32) zwischen der Hauptschneide (26) und einer Freisparung (34) des Schneidenabschnittes (24) ausgebildet ist.

5. Hobel- und/oder Stoßwerkzeug nach Anspruch 3 oder 4, **dadurch gekennzeichnet, dass** die Hauptschneide (26) zwischen der Spanfläche (32) und einer Freiwinkelfläche (38) ausgebildet ist, die mit der Längsachse (A) einen Freiwinkel (FW) von wenigstens 2° einschließt.

6. Hobel- und/oder Stoßwerkzeug nach einem der Ansprüche 1 bis 5, **dadurch gekennzeichnet, dass** sich der Schneidenabschnitt (24) von der Hauptschneide (26) zum Schaft (20) hin verjüngt und dabei einen Verjüngungswinkel (JW) zwischen 3 und 5° aufweist.

7. Hobel- und/oder Stoßwerkzeug nach einem der Ansprüche 1 bis 6, **dadurch gekennzeichnet, dass** in den Scheidenabschnitt (24) ein Kühlkanal (46) eingelassen ist, der sich zur Spanfläche (32) erstreckt.

8. Hobel- und/oder Stoßwerkzeug nach einem der Ansprüche 1 bis 7, **dadurch gekennzeichnet, dass** an dem Schaft (20) eine Ausrichtfläche (44) ausgeformt ist.

9. Hobel- und/oder Stoßwerkzeug nach einem der Ansprüche 1 bis 8, **dadurch gekennzeichnet, dass** die Hauptschneide (26) aus Cermet hergestellt ist.

10. Bearbeitungsverfahren für die Herstellung einer mehrfach drehsymmetrischen Werkzeugaufnahme (6) in einem Befestigungselement (2) unter Verwendung eines Hobel- und/oder Stoßwerkzeuges (H) nach einem der Ansprüche 1 bis 9, **dadurch gekennzeichnet, dass**
in einem ersten Schritt entlang einer Bearbeitungsachse (B) eine Ausgangsbohrung (50) in das Befestigungselement (2) eingearbeitet wird,
in einem zweiten Schritt ein Bearbeitungsablauf ausgeführt wird, bei dem
a) das Hobel- und/oder Stoßwerkzeug (H) aus einer Ausgangslage in einer ersten Drehstellung parallel zur Bearbeitungsachse (B) in die Ausgangsbohrung (50) hinein verlagert wird
b) auf Höhe eines Sacklochbodens (12) zur Bearbeitungsachse (B) hin bewegt wird
c) parallel zur Bearbeitungsachse (B) wieder aus der Ausgangsbohrung (50) heraus bewegt wird und
d) in eine nachfolgende Ausgangslage in der ersten Drehstellung verfahren wird, die gegenüber der vorhergehenden Ausgangslage entlang einer senkrecht zur Bearbeitungsachse stehenden Profilierungsrichtung (P1) um eine vorgegebene Zustellung (Z) versetzt angeordnet ist,
e) der Bewegungsablauf solange wiederholt wird, bis ein vorgegebenes Eckenmaß erreicht ist
in einem dritten Schritt das Hobel- und/oder Stoßwerkzeug (H) in eine Ausgangslage in einer zweiten Drehstellung verlagert und aus dieser heraus ein dem zweiten Schritt entsprechender Bearbeitungsablauf durchgeführt wird,
und in nachfolgenden Schritten das Hobel- und/oder Stoßwerkzeug (H) wiederkehrend in Ausgangslagen in weiteren Drehstellungen verlagert wird und aus diesen heraus jeweils ein dem zweiten Schritt entsprechender Bearbeitungsablauf durchgeführt wird, bis die mehrfach drehsymmetrische Werkzeugaufnahme (6) vollständig ausgebildet ist.

11. Bearbeitungsverfahren nach Anspruch 10, **dadurch gekennzeichnet, dass** die Zustellung (Z) im zweiten Schritt jeweils höchstens 1 % der Nennweite der herzustellenden Werkzeugaufnahme (6) beträgt.

12. Bearbeitungsverfahren nach Anspruch 10 oder 11, **dadurch gekennzeichnet, dass** das Hobel- und/oder Stoßwerkzeug (H) auf Höhe des Sacklochbodens (12) senkrecht zur Bearbeitungsachse (B) zu dieser hin bewegt wird.

13. Bearbeitungsverfahren nach Anspruch 10 oder 11, **dadurch gekennzeichnet, dass** das Hobel- und/oder Stoßwerkzeug (H) auf Höhe des Sacklochbodens (12) entlang einer Schrägen zur Bearbeitungsachse (B) zu dieser hin bewegt wird.

14. Befestigungselement mit einer mehrfach drehsymmetrischen Werkzeugaufnahme, **dadurch gekennzeichnet, dass** die Werkzeugaufnahme (6) durch ein ausgehobeltes profiliertes Sackloch (10) gebildet ist und das Innenprofil (8) der Werkzeugaufnahme (6) bis zu einem Sacklochboden (12) durchgehend ausgebildet ist.

15. Befestigungselement nach Anspruch 14, **dadurch gekennzeichnet, dass** der Sacklochboden (12) konisch ausgeformt ist.
